# EUROPÄISCHE PATENTSCHRIFT

(11) **EP 0 631 063 B1**
(45) Veröffentlichungstag und Bekanntmachung des Hinweises auf die Patenterteilung: **20.11.1996**
(21) Anmeldenummer: 94107575.6
(22) Anmeldetag: 17.05.1994
(51) Int. Cl.: F16D 3/62

(54) **Drehschwingungsdämpfer**
Rotational vibration damper
Amortisseur de vibrations de rotation

(30) Priorität: 24.06.1993 DE 4320938
(43) Veröffentlichungstag der Anmeldung: 28.12.1994
(73) Patentinhaber: Firma Carl Freudenberg, D-69469 Weinheim (DE)
(72) Erfinder: Colford, Terry, Queniborough, Leicestershire (GB)

(56) Entgegenhaltungen:
- WO-A-79/00033
- DE-B- 1 238 947
- DE-C- 970 740
- FR-A- 569 920
- FR-A- 1 087 861
- US-A- 2 540 703

## Beschreibung

Die Erfindung betrifft einen Drehschwingungsdämpfer nach dem Oberbegriff von Anspruch 1.

Ein solcher Drehschwingungsdämpfer ist aus der DE-C-970 740 bekannt. Die Speichen des vorbekannten Drehschwingungsdämpfers sind durch Gummibuchsen mit dem Innen- und dem Außenring verbunden.

Ein weiterer Drehschwingungsdämpfer ist aus der DE-OS 28 10 885 bekannt. Die in Umfangsrichtung auslenkbaren Speichen werden dabei durch Blattfedern gebildet, welche in einer nach außen hermetisch abgeschlossenen, flüssigkeitsgefüllten Kammer angeordnet und an einem Außenring unverdrehbar festgelegt sind. Mittels der elastischen Speichen läßt sich dadurch ein Drehmoment von dem inneren auf den äußeren Ring schwingungsisoliert übertragen, wobei sich eine gewisse Flüssigkeitsdämpfung ergibt. Eine dauerhafte Abdichtung der flüssigkeitsgefüllten Kammern läßt sich nur schwierig erzielen.

Der Erfindung liegt die Aufgabe zugrunde, einen solchen Drehschwingungsdämpfer derart weiter zu entwickeln, daß sich eine wesentlich vereinfachte Konstruktion und eine gute Dauerhaltbarkeit ergibt.

Diese Aufgabe wird erfindungsgemäß bei einem Drehschwingungsdämpfer nach dem Oberbegriff mit den kennzeichnenden Merkmalen von Anspruch 1 gelöst. Auf vorteilhafte Ausgestaltungen nehmen die Unteransprüche Bezug.

Bei dem erfindungsgemäßen Drehschwingungsdämpfer ist es vorgesehen, daß die Speichen unverformbar ausgebildet und durch Zwischenschichten aus Gummi einerseits direkt an dem Innenring und andererseits direkt an dem Außenring anvulkanisiert sind. Die Zwischenschichten, der Innenring, der Außenring und die Speichen sind adhäsiv verbunden, bei der Formgebung und Verfestigung des die Zwischenschichten bildenden Werkstoffkörpers durch unmittelbares Anvulkanisieren an die einander gegenüberliegenden Flächen.

Die Herstellung des Drehschwingungsdämpfers ist dementsprechend einfach. Darüber hinaus besteht die Möglichkeit, die Größe des von dem Innen- auf den Außenring übertragbaren Drehmomentes sowie die sich bei der Übertragung eines Drehmomentes ergebende Dämpfungswirkung durch die Auswahl eines bestimmten Gummiwerkstoffs für die Herstellung der Zwischenschichten an besondere Gegebenheiten des Anwendungsfalles anzupassen. Drehschwingungsdämpfer, bei denen der Innen- und der Außenring sowie die Speichen identisch ausgebildet sind können dadurch verhältnismäßig einfach voneinander abweichenden Anwendungszwecken zugänglich gemacht werden.

Die Speichen können im wesentlichen plattenähnlich gestaltet und in Ebenen angeordnet sein, die sich parallel zu der Rotationsachse erstrecken. Sie verleihen aufgrund ihrer unnachgiebigen Ausbildung dem Außenring eine gute axiale Führung, bezogen auf den Innenring. Auch größere Axialkräfte können dadurch von dem Innen- auf den Außenring problemlos übertragen werden.

Bei der Einleitung radialgerichteter Kräfte ergibt sich eine senkrechte Zusammenstauchung der Zwischenschichten in sich selbst. Diese haben eine relativ große, flächenmäßige Ausdehnung. Auch bei Verwendung von relativ weichen elastischen Werkstoffen zur Herstellung der Zwischenschichten können daher relativ große Radialkräfte übertragen werden, ohne daß sich eine nennenswerte Relativverlagerung des Außenringes in bezug auf den Innenring in radialer Richtung ergibt. In bezug auf die Vermeidung von Unwuchterscheinungen bei hohen Drehzahlen ist das von großem Vorteil. Es bietet sich dadurch an, den Außenring als Riemenscheibe auszubilden und den Drehschwingungsdämpfer zum schwingungsentkoppelten Antrieb von riemengetrieben Nebenaggregaten in einem Kraftfahrzeug zu verwenden.

Die spezifische Querschnittsbelastung der Zwischenschichten ist bei einer Relativverdrehung des Außenringes in Bezug auf den Innenring dann besonders gering, wenn die Speichen auf den dem Innen- und dem Außenring zugewandten Seiten in konvexen Flächen enden, die sich parallel zu der Rotationsachse erstrecken. Die Zwischenschichten sollen dabei im wesentlichen an allen Teilstellen von übereinstimmender Dicke sein. Die Erfüllung dieser Forderung bedingt, daß der Innenring auf der den Speichen zugewandten Seite mit konkaven Einwölbungen versehen ist, die sich parallel zu der Rotationsachse erstrecken. Die Erzeugung entsprechender Einwölbungen ist dann verhältnismäßig einfach, wenn der Innenring durch ein Preß- oder Gießverfahren erzeugt ist. Auch die Verwendung von polymeren Werkstoffen ist zu seiner Herstellung in den meisten Fällen möglich.

Die Speichen sollen in sich selbst unverformbar ausgebildet sein. Sie können, wenn diese Bedingung eingehalten ist, vielfältig modifiziert sein und beispielsweise in einer sich quer zu der Rotationsachse erstreckenden Ebene ein hantelförmiges Profil haben. Bei einer relativ verminderten Trägheitsmasse steht in diesem Falle eine relativ vergrößerte Bindefläche für die Festlegung der Zwischenschichten aus Gummi zur Verfügung.

Die Speichen können zur weiteren Gewichtsersparnis zwischen den sie außen- und innenseitig begrenzenden Flächen an zumindest einer Stelle mit einer in axialer Richtung offenen Aussparung und / oder Durchbrechung versehen sein. In dem hierdurch gewonnenen Freiraum lassen sich Bedarfsweise sekundäre Maschinenteile unterbringen, beispielsweise Bestandteile eines weiteren Drehschwingungsdämpfers, der mit dem Außen- oder Innenring verbunden ist.

Die Speichen des Rotationsteils können, in einer quer zu der Rotationsachse errichteten Ebene geschnitten, ein faßartiges Profil haben. Sie weisen hierdurch eine besonders gute Tragfähigkeit in radialer Richtung auf, wobei die Zwischenschichten aus Gummi in Umfangsrichtung und in radialer Richtung auf sehr kleine Ausdehnungen beschränkt sind. Bedarfsweise ist es hierbei möglich, den Zwischenschichten, die im Bereich des Außenumfanges angeordnet sind, Abmessungen zu geben, die mit den radial nach innen verlagerten Zwischenschichten übereinstimmen. Bei einer ausgezeichneten Abstützung in radialer Richtung resultiert hieraus eine relativ leichte Auslenkbarkeit in Umfangsrichtung. Drehschwingungen können dadurch in ausgezeichneter Weise isoliert werden werden.

Der Gegenstand der Erfindung wird nachfolgend anhand der Zeichnung verdeutlicht. Es zeigen:
- Figur 1: eine erste Bauart des erfindungsgemäßen Drehschwingungsdämpfers in einer Ansicht von vorn.
- Figur 2: den Drehschwingungsdämpfer gemäß Figur 1 in quergeschnittener Darstellung.
- Figur 3: eine weitere Ausführung des erfindungsgemäßen Drehschwingungsdämpfers in einer Ansicht von vorn.
- Figur 4: ein Rotationsteil in längsgeschnittener Darstellung
- Figur 5: eine weitere Ausführung des Rotationsteils in einer Ansicht von vorn.

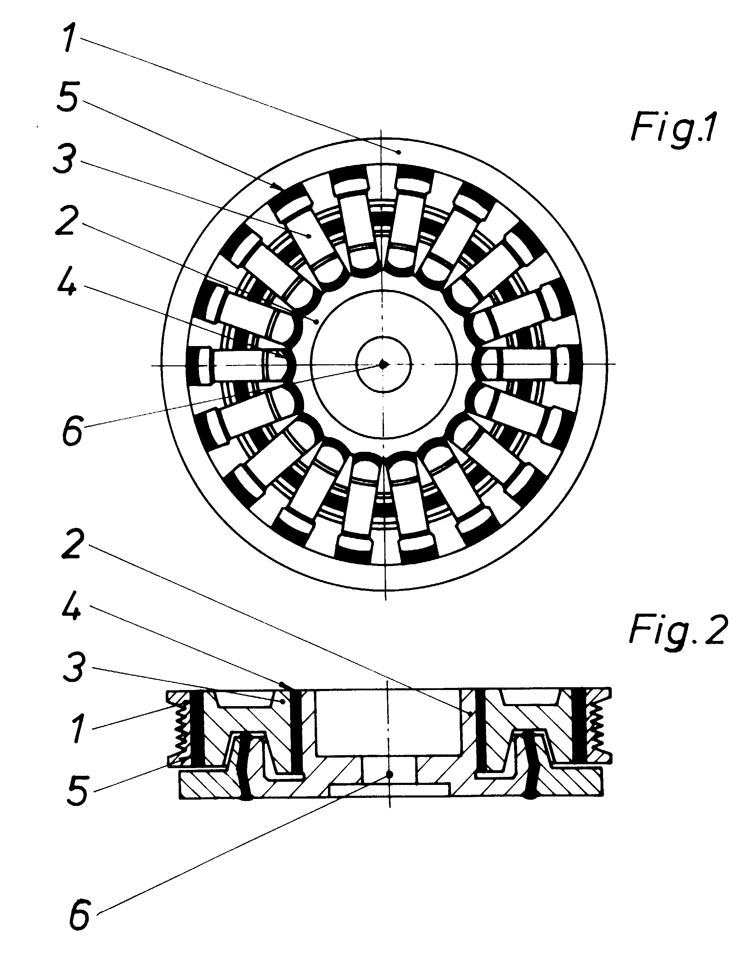

Der in Figur 1 gezeigte Drehschwingungsdämpfer besteht aus einem Außenring 1, einem Innenring 2, einer Vielzahl von gleichmäßig in Umfangsrichtung verteilten, unverformbaren Speichen 3 sowie den Zwischenschichten 4 aus Gummi, welche den Innenring 2, die Speichen 3 und den Außenring 1 miteinander verbinden. Die Speichen 3 sind radial außen- und innenseitig durch Flächen begrenzt, die sich parallel zu der Rotationsachse 6 erstrecken und quer zu dieser ein konkaves Profil haben. Die Zwischenschichten 4 sind in allen ihren Teilbereichen im wesentlichen von übereinstimmender Dicke. Der Außenring 2 ist dementsprechend an den den Speichen 3 radial gegenüberliegenden Stellen durch konvexe Ausnehmungen begrenzt.

In Figur 2 ist der Drehschwingungsdämpfer gemäß Figur 1 in quergeschnittener Darstellung wiedergegeben. Dadurch wird deutlich, daß die Speichen 3 zwischen ihrer äußeren und ihrer inneren Begrenzungsfläche beiderseits mit in axialer Richtung C-förmig geöffneten Durchbrechungen versehen sind, die auf der einen Seite zur Aufnahme eines Bestandteiles eines Drehschwingungsdämpfers dienen, der mit dem Innenring 2 verbunden ist. Drehschwingungen des Innenringes lassen sich hierdurch hochgradig dämpfen. Der Außenring ist als Riemenscheibe ausgebildet und für die Einleitung einer Drehbewegung in den Drehschwingungsdämpfer bestimmt. Die Drehbewegungen überlagernder Drehschwingungen werden dabei hochgradig isoliert durch die in Umfangsrichtung auslenkbaren, in sich selbst unverformbaren Speichen 3, die durch die Zwischenschichten 4 aus Gummi einerseits mit dem Innenring 2 und andererseits mit dem Außenring 1 verbunden sind. Die radial nur in einer Richtung wirksamen Riemenkräfte können dabei ohne nennenswerte Radialverlagerung des Außenringes 1 in Bezug auf den Innenring 2 aufgenommen werden, was in bezug auf die Vermeidung von Unwuchterscheinungen von großem Vorteil ist.

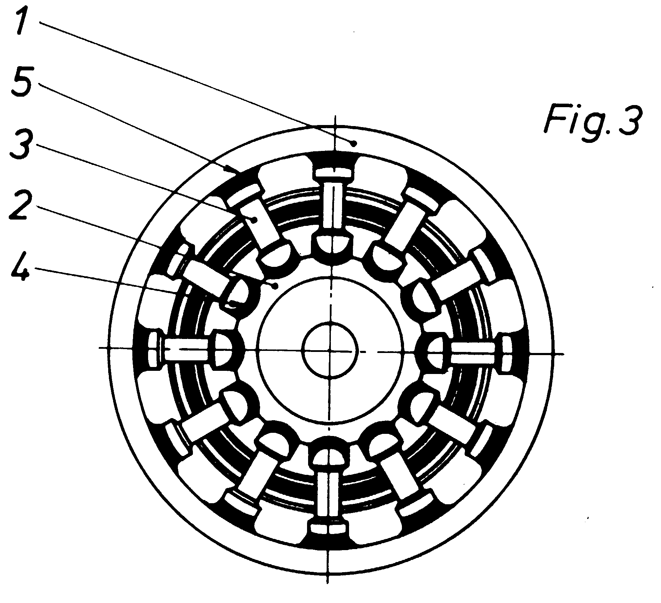

Der in Figur 3 gezeigte Drehschwingungsdämpfer unterscheidet sich von der in Figur 1 gezeigten Ausführung dadurch, daß die in Umfangsrichtung auslenkbaren Speichen 3, in einer Ebene quer zur Rotationsachse betrachtet, von hantelförmigem Profil sind. Die die Speichen außen- und innenseitig begrenzenden Flächen 5 sind, quer zur Rotationsachse betrachtet, von konvexem Profil. Sie erstrecken sich im Übrigen wie vorstehend beschrieben parallel zur Rotationsachse. Die Zwischenschichten 4 sind in allen ihren Teilbereichen von im wesentlichen übereinstimmender Dicke. Sie bestehen aus Gummi.

Durch die hantelförmige Ausbildung des Profils der Speichen 3 ergibt sich eine Verminderung der Trägheitsmasse. Das Leistungsgewicht des in Figur 3 gezeigten Drehschwingungsdämpfers ist dadurch verbessert.

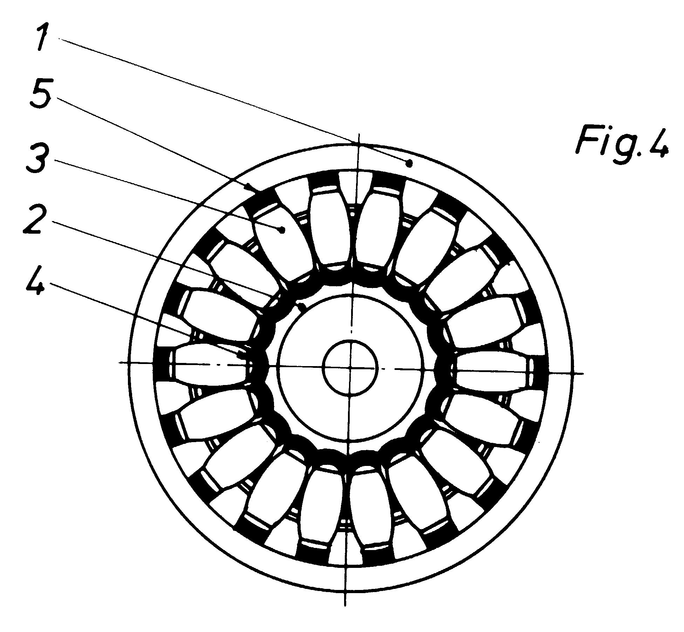

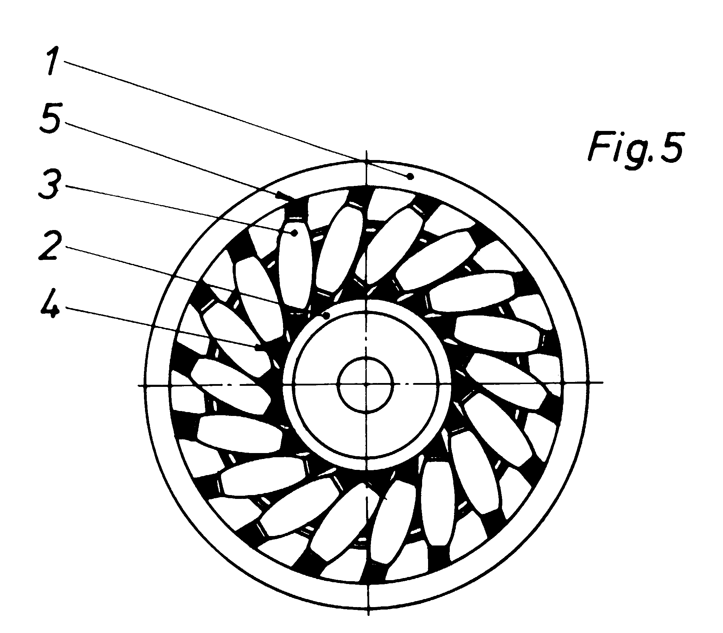

Die Figuren 4 und 5 zeigen weitere beispielshafte Ausführungen des erfindungsgemäßen Rotationsteils, bei dem die Speichen 3 in einer quer zu der Rotationsachse errichteten Ebene geschnitten, ein faßartiges Profil haben. Figur 4 zeigt das Rotationsteil in nicht drehendem Zustand. Es ist zu ersehen, daß die Speichen 3 auch im mittleren Bereich in Umfangsrichtung einen Abstand voneinander haben. Drehschwingungen zwischen dem Außenring 1 und dem Innenring 2 können dadurch problemlos aufgenommen und durch eine Verformung der Gummischichten 4 isoliert werden.

In Figur 5 ist das Rotationsteil gemäß Figur 4 in einer Gestalt gezeigt, die sich bei einer extrem großen Relativverdrehung des Außenringes 1 in Bezug auf den Innenring 2 ergibt. Es ist zu ersehen, daß die Speichen 3, in Umfangsrichtung betrachtet, in eine gegenseite Anlageberührung gelangen. Sie bestehen aus einem unnachgiebigen Werkstoff, wodurch eine noch weitergehende Relativverdrehung des Außenringes 1 in Bezug auf den Innenring 2 sehr stark gehemmt wird. Überlastungsbedingte Beschädigungen der aus einem gummi-elastischen Werkstoff bestehenden Zwischenschichten 4 lassen sich dadurch weitgehend vermeiden.

Die in den Figuren 4 und 5 gezeigte Ausführung ist auch in einer Form denkbar, bei die Speichen 3, entlang einer in der Rotationsachse 6 errichteten Ebene geschnitten, ein axial zumindest in einer Richtung C-förmig geöffnetes Profil haben. Die hierdurch gebildete Ausnehmung kann analog zu der in Figur 2 gezeigten Variante des erfindungsgemäßen Rotationsteils genutzt werden, um einen Ringvorsprung eines sekundären Maschinenteiles aufzunehmen, welches gemeinsam mit dem Rotationsteil umläuft. Darbei besteht die Möglichkeit, den radialen Abstand zwischen dem Ringvorsprung und den die Ausnehmung in radialer Richtung begrenzende Flächen so zu dimensionieren, daß sich beim Erreichen der maximal zulässigen Auslenkbewegung des Außenringes 1 in Bezug auf den Innenring 2 eine gegeseitige Anlageberührung zwischen dem Ringvorsprung 8 und den genannten Flächen ergibt. Die Ausbildung hat insofern in gewisser Hinsicht eine Anschlagfunktion. Sie ist im unteren Teil der Darstellung gemäß Figur 5 ausschnittsweise angedeutet. Zumindest die radial innenliegenden Zwischenschichten 4 aus Gummi lassen sich hierdurch gut vor einer mechanischen Überdehnung und Zerstörung schützen.

## Patentansprüche

1. Drehschwingungsdämpfer mit einem Außen- und einem Innenring (1,2), die einander umschließen und durch in Umfangsrichtung auslenkbare Speichen (3) drehelastisch verbunden und aufeinander abgestützt sind, dadurch gekennzeichnet, daß die Speichen (3) unverformbar ausgebildet und durch Zwischenschichten (4) aus Gummi einerseits direkt an dem Innenring (2) und andererseits direkt an dem Außenring (1) anvulkanisiert sind.

2. Drehschwingungsdämpfer nach Anspruch 1, dadurch gekennzeichnet, daß die Speichen (3) auf den dem Innen- und dem Außenring (2,1) zugewandten Seiten in konvexen Flächen (5) enden, die sich parallel zu der Rotationsachse (6) erstrecken.

3. Drehschwingungsdämpfer nach Anspruch 1 bis 2, dadurch gekennzeichnet, daß der Außenring (1) durch eine Riemenscheibe gebildet ist.

4. Drehschwingungsdämpfer nach Anspruch 1 bis 3, dadurch gekennzeichnet, daß die Speichen (3), entlang einer in der Rotationsachse (6) errichteten Ebene geschnitten, ein axial zumindest in einer Richtung C-förmig geöffnetes Profil haben.

5. Drehschwingungsdämpfer nach Anspruch 1 bis 4, dadurch gekenn-zeichnet, daß die Speichen (3), in einer quer zu der Rotationsachse (6) errichteten Ebene geschnitten, ein hantelförmiges Profil haben.

## Claims

1. A torsional vibration damper having an outer and an inner ring (1, 2) which surround one another and are connected in a rotationally elastic manner and supported on one another by spokes (3) deflectable in the peripheral direction, characterized in that the spokes (3) are of undeformable design and are vulcanized by intermediate coatings (4) of rubber directly to the inner ring (2) on one side and directly to the outer ring (1) on the other side .

2. A torsional vibration damper according to claim 1, characterized in that the spokes (3) on the sides facing the inner and the outer ring (2, 1) end in convex surfaces (5) which extend parallel to the rotation axis (6).

3. A torsional vibration damper according to either of claims 1 and 2, characterized in that the outer ring (1) is formed by a belt pulley.

4. A torsional vibration damper according to any of claims 1 to 3, characterized in that the spokes (3), cut along a plane constructed in the rotation axis (6), have a profile open axially in a C-shape at least in one direction.

5. A torsional vibration damper according to any of claims 1 to 4, characterized in that the spokes (3), cut in a plane constructed transversely to the rotation axis (6), have a dumb-bell profile.

## Revendications

1. Amortisseur de vibrations de rotation avec une bague extérieure et une bague intérieure (1, 2) qui s'entourent mutuellement et qui sont reliées de manière à permettre une rotation élastique et appuyées l'une sur l'autre par des rayons (3) dirigeables dans le sens périphérique, caractérisé en ce que les rayons (3) sont conçus de façon non déformable et sont vulcanisés par des couches intermédiaires (4) en caoutchouc, d'une part, directement à la bague intérieure (2) et, d'autre part, directement à la bague extérieure (1).

2. Amortisseur de vibrations de rotation selon la revendication 1, caractérisé en ce que les rayons (3) se terminent, sur les côtés orientés vers la bague intérieure et la bague extérieure (2, 1), en surfaces convexes (5) qui s'étendent parallèlement à l'axe de rotation (6).

3. Amortisseur de vibrations de rotation selon les revendications 1 à 2, caractérisé en ce que la bague extérieure (1) est formée par une poulie.

4. Amortisseur de vibrations de rotation selon les revendications 1 à 3, caractérisé en ce que les rayons (3), coupés le long d'un plan élevé dans l'axe de rotation (6), ont axialement un profil ouvert en forme de C au moins dans un sens.

5. Amortisseur de vibrations de rotation selon les revendications 1 à 4, caractérisé en ce que les rayons (3), coupés dans un plan élevé transversalement à l'axe de rotation (6), ont un profil en forme d'haltère.
